Europäisches Patentamt

European Patent Office

Office européen des brevets·

(19)

(11) Publication number: **0 023 107 B1**

(12) **EUROPEAN PATENT SPECIFICATION**

(45) Date of publication of patent specification: **07.09.83**

(51) Int. Cl.³: **B 23 K 1/00**

(21) Application number: **80302311.8**

(22) Date of filing: **08.07.80**

(54) Method and apparatus for vapour phase soldering.

(30) Priority: **09.07.79 GB 7923904**
**04.10.79 GB 7934554**

(43) Date of publication of application:
**28.01.81 Bulletin 81/4**

(45) Publication of the grant of the patent:
**07.09.83 Bulletin 83/36**

(84) Designated Contracting States:
**BE DE FR GB IT NL SE**

(56) References cited:
**DE - A - 2 624 103**
**FR - A - 2 014 081**
**FR - A - 2 144 707**
**GB - A - 2 027 062**
**US - A - 3 460 816**
**US - A - 4 077 467**
**US - A - 4 098 616**
**US - A - 4 115 601**

(73) Proprietor: **ELECTROVERT LIMITED**
**3285 Cavendish Boulevard**
**Montreal, Quebec H4B 2L9 (CA)**

(72) Inventor: **Woodgate, Ralph William**
**1380 Grande Allee**
**Carignan, Quebec J3L 3P9 (CA)**

(74) Representative: **Warren, Stanley Francis et al,**
**Baron & Warren 18 South End Kensington**
**London W8 5BU (GB)**

Courier Press, Leamington Spa, England.

## Method and apparatus for vapour phase soldering

Vapour phase soldering or reflow, sometimes known as condensation soldering, is a process wherein the vapours of a high temperature boiling point liquid are allowed to contact the objects or components to be soldered or reflowed, such as printed circuit boards or other electronic devices, the latent heat of vaporization given up when the vapours condense on the object quickly raising its temperature and causing any solder, tin or tin-lead electroplate thereon to melt and flow.

The current state of the art is, in general, disclosed in U.S. Patent No. 3,866,307 issued Feburary 18, 1975, to Pfahl et al. Other relevant art is contained in Chu et al U.S. Patents Nos. 3,904,102 issued September 9, 1975; 4,032,033 issued June 28, 1977; 4,055,217 issued October 25, 1977 and 4,090,843 issued May 23, 1978; Pfahl U.S. Patent No. 3,947,240 issued March 30, 1976 and Amman et al U.S. Patent No. 4,115,601 issued September 19, 1978. The working fluid is heated to boiling point in a container in which the hot vapours are retained by gravity above the boiling liquid. Cooling coils, and secondary vapours, are also used to assist in this containment and prevent the vapours rising above and being lost out of the top of the container. This process requires that the object to be heated must be lowered into and then raised out of the vapour. This is a slow process.

The present invention has for an object to provide a method of and apparatus for vapour phase soldering which is suited for use in line mass production according to modern industrial requirements.

Another object of the invention is to provide an improved method of and apparatus for vapour phase soldering which reduces losses of the expensive working fluid and its vapours.

A further object of the invention is to provide an improved method of and apparatus for vapour phase soldering including means for generating the vapour which allows almost instantaneous control of the volume of vapour generated, thereby conserving energy and using power only when vapour is actually required.

To this end the invention consists in a method of vapour-phase soldering comprising the steps of conveying the objects to be heated, continuously or intermittently, along a path through a treatment zone containing the vapour generated by heating a high boiling point working fluid, whereby the objects are heated to effect solder reflow, condensed vapour being re-heated and re-vapourised, characterised by the further steps of discharging the vapour into the treatment zone to one side of said path, flowing the vapour across said path to a collecting zone at the other side of said path, cooling and condensing vapour which flows into said collecting zone, collecting the vapour condensed in said collecting zone, and recycling the condensed vapour through the heating, discharging, flowing and cooling steps.

To minimise losses of the expensive working fluid, vapour which flows out from the treatment zone, through the openings which allow the entrance and exit of the objects to be soldered, is trapped by a curtain or series of curtains of air. The air/vapour mixture is cooled to condense the working fluid which has been trapped, and is collected for re-use. The air separated from the mixture is preferably recirculated and may be heated, preferably by the heat removed in the process of cooling and condensing the vapours.

Preferably the said path extends through the treatment zone in a generally horizontal direction, generated vapours being discharged into the treatment zone above said path and falling under the influence of gravity over the objects to be heated, and being cooled after having fallen below the said path.

The invention also consists in a vapour-phase soldering apparatus comprising heating means for vapourising a high boiling point working fluid and a treatment chamber in which the vapour of said high boiling point working fluid heats the objects to be heated while they are conveyed, continuously or intermittently, by conveyor means along a path through the vapour, characterised by the heating means for generating the vapour of said working fluid being arranged to discharge the vapour generated thereby into the treatment chamber above said conveyor means, a collecting chamber below said conveyor means to collect vapour traversing said path, cooling means for condensing vapour in said collecting chamber, and means for withdrawing working fluid condensate from said collecting chamber. The apparatus may also include means for recycling the collected condensed vapours to the vapour generating means.

The vapour generating means may be located in or form part of the treatment chamber assembly.

By using the vapours to flow across the path along which the objects are conveyed, the invention avoids restricting the path to include lowering and raising movements as required by existing systems. This invention thus makes it possible to convey the objects along a substantially horizontal path which is preferred by industry.

Because the liquid is very costly, it is necessary to take extreme measures to avoid losses of the vapour and liquid. The equipment used for the process must have openings to allow for the entry and exit of the objects to be soldered and according to one embodiment of the invention, the vapours are intercepted by and prevented from escaping through the entry and exit by a curtain or series of curtains of air. These curtains may be provided in a pre-heat chamber upstream of the treatment chamber and a drying chamber downstream of the treatment chamber. The vapour trapped in the air curtains is cooled and condensed in cooled collecting chambers beneath the pre-heat and drying chambers.

The air is preferably recirculated and, to further minimise losses of the working fluid, any vapour which still remains mixed with the recirculated air must be separated and returned to the generator for re-use. According to one embodiment, the separating means for condensing the vapour from the air/vapour mixture comprises a chamber containing a centrifugal fan device, the rotation of which throws the air/vapour mixture fed to the chamber radially outwardly towards a cooling surface or surfaces, the chamber having an outlet for condensed vapour and another outlet for the separated air.

The separating means of the invention makes use, in order to achieve efficient separation, of two characteristics of the vapour, viz, the much higher density of the vapour compared to air (10 to 20 times) and the high boiling point of the working fluid.

In order that the invention may be more clearly understood, reference will now be made to the accompanying drawings in which:—

Figure 1 is a schematic showing of one embodiment of an apparatus according to the invention,

Figures 2 and 3 show two alternative forms of the vapour generating means, and

Figure 4 is a cross-section through one embodiment of an air-vapour separating device according to the invention.

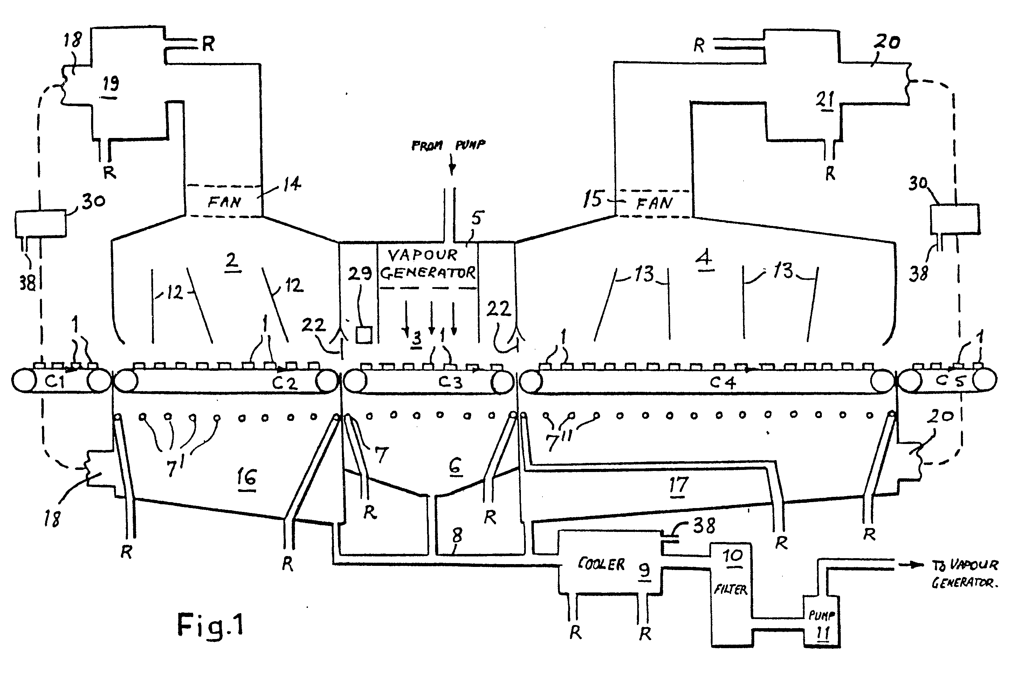

Referring to Figure 1, the objects 1 to be heated are conveyed on a horizontal screen conveyor system C1, C2, C3, C4 and C5 in succession through a pre-heat chamber 2, a heating or treatment chamber 3, and a drying chamber 4. The vapour is generated by vapour generator 5 in the upper part of the treatment chamber 3 above the horizontal path along which the objects 1 are conveyed, and the generated vapours are allowed to fall under the influence of gravity over the objects in the treatment zone and then into a cooled collecting chamber 6 equipped with cooling coils 7 where the vapour is condensed. This condensate passes into pipe 8 and, after further cooling in a cooler 9 and filtering in a filter 10, is recycled by the pump 11 to the vapour generator 5.

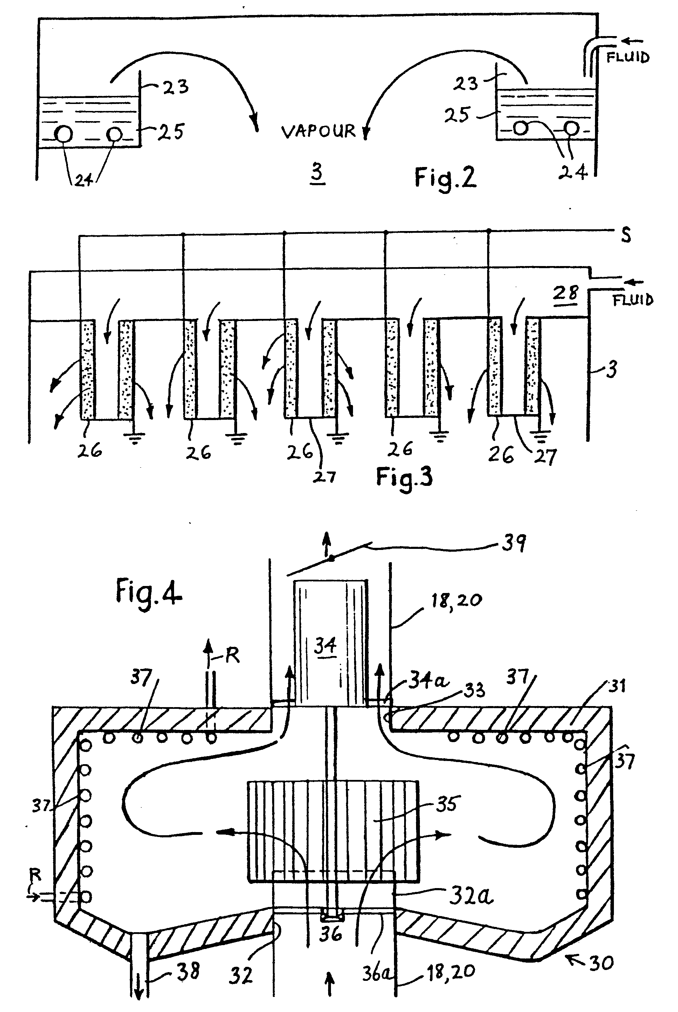

Loss of vapour from the treatment zone is prevented, or at least substantially eliminated, by two series of air curtains defined by baffles 12, 13 in the chambers 2 and 4 respectively. Heated air is circulated through these chambers by fans 14, 15 respectively and is collected in containers 16, 17 below the conveyor sections C2, C4 respectively, after being cooled by cooling coils 7', 7" to condense any vapour. Air collected in the container 16 is returned via the duct 18 to the inlet of the air heater 19 connected to the fan 14. Likewise, air collected in the container 17 is returned via the duct 20 to the inlet of the air heater 21 connected to the fan 15. The recirculated air may be heated in the heaters 19 and 21, at least partially by the heat removed by the vapour condensation process. After being circulated through the cooling coils and cooler to condense and cool the working fluid, the refrigerant is used to heat the air in air heaters 19 and 21. Refrigerant connections are shown at R. Additional cooling or heating may be provided as necessary. To recover vapour trapped in the recirculated air, each of the ducts 18 and 20 includes an air/vapour separator 30 which will be more fully described with reference to Figure 4.

The heated air curtains in the chamber 2 will preheat the objects 1 and help to reduce the shock of the heat in the treatment chamber. The heated air curtains in the drying chambers 4 will evaporate residual working liquid from objects which have left the treatment chamber.

The conveyor is preferably split into sections as shown such that each section will be contained within one constant temperature area and avoid removing heat from that particular area. For example, in this proposed machine, the first conveyor section C1 will take the objects to be heated up to the entrance air curtain chamber 2; the second C2 up to the treatment chamber 3; the third C3 within the treatment chamber; the fourth C4 through the exit air curtain, and the fifth C5 will exit the objects from the machine. This system also avoids the vapours condensing on a cold conveyor and being taken out of the machine. Suitable means or arrangements are provided for the transfer of the objects from one conveyor section to the next.

The vapour generator 5 may employ any method of heating the fluid and allowing the vapours to cascade into the treatment zone. There are, however, advantages in using an electrically conductive porous heating element to generate the vapours, as later described.

The object to be heated will require to remain in the working vapour until it reaches the temperature at which the solder reflows. This time will be dependent on the thermal capacity of the object, and the supply of vapour. However, experiments show that for normal electronic assemblies, a time of 10 to 20 seconds is adequate. To accommodate large items without requiring an excessively long chamber or very slow conveyor speeds, it is proposed that the conveyor sections be capable of an intermittent motion whereby the object is conveyed rapidly into the working chamber and remains stationary until the solder has completely melted.

This intermittent action also permits the operation of shutters 22 to close off the treatment chamber during the actual heating period and the intermittent operation of the vapour generator appropriate to match the volume of vapour generated to the thermal requirements of the object to be heated.

The vapour generator may consist of a vessel 23 as shown in Figure 2 with electrical resistance heaters 24 and an opening to allow the vapour from the high boiling point fluid 25 to flow by gravity into the treatment zone.

However, this method of vapour generation suffers from the time lag in producing vapour at start-up, and in increasing or reducing the production of vapour.

Preferably, according to a feature of the invention and as shown in Figure 3, the vapour is generated by one or more electrically conductive porous heating elements 26. The elements of porous conductive material are conveniently hollow, being open at their upper ends and closed by walls 27 at their lower ends. The electrically conductive porous material of the elements 26 has interconnecting pores and is heated from a supply of electricity S. The working fluid is fed via the duct 28 to the interiors of a plurality of hollow elements 26 and is vaporized in passing through the heated porous walls of the elements 26 and discharged into the top of the treatment chamber 3. This method produces the vapour almost instantaneously and has the further advantage of only using power when vapour is actually required, and allows almost instantaneous control of the volume of vapour generated. Control of the generator may be effected by photo-electric or other proximity sensing system, diagrammatically indicated at 29 in Figure 1, whereby to generate vapour only when an object 1 is in the treatment chamber.

Figure 4 shows a preferred form of the air/vapour separating device 30. It comprises a circular chamber 31 interposed between two parts of the duct 18 or 20. The chamber has a central inlet opening 32 in its base through which the air/vapour mixture in the duct 18 or 20 enters the chamber, and a central outlet opening 33 in its top wall through which separated air is discharged into the outlet part of the duct 18 or 20. Within the chamber and aligned with the openings 32, 33 is a centrifugal fan 35 conveniently driven by an electric motor 34 located in the outlet opening 33. The motor and fan are supported in such a way that air can flow around the motor 34 and the fan bearing 36, for example, by radial arms 34a and 36a between the motor 34 and the wall of the opening 32 respectively. The opening 32 may be provided with an extension duct 32a which extends into the interior of the centrifugal fan 35.

Around the inside of the peripheral and top walls of the chamber 31 are mounted cooling coils 37 through which circulates a cooling liquid or refrigerant. Refrigerant connections are shown at R. Vapour which condenses in the chamber is discharged through a pipe 38 arranged to connect with an annular channel around the base of the chamber.

In operation a fan 14 or 15 causes the air/vapour mixture from the soldering apparatus to enter the chamber 31 through the inlet opening 32 and pass to the rotating centrifugal fan 35. The air/vapour mixture is thrown radially outwardly by the fan 35, and because of the higher density of the vapour the ratio vapour/air will increase towards the peripheral cooling coils in the chamber. The vapour condenses on the coils and drains down to the pipe 38 through which it is taken off to a suitable reservoir, e.g. the cooler 9, from which it can be pumped for filtration, water separation, and subsequent re-use.

The separated air will be displaced from the chamber by the incoming mixture and exits through the outlet 33. The flow of air/vapour mixture can be regulated by a damper 39, and, together with the motor speed, will be adjusted to provide maximum separation depending on the prevailing parameters of the air/vapour mixture.

It will be understood that the separating device according to the invention may be used in connection with vapour phase soldering apparatus other than that described with reference to Figure 1 and that two or more separating devices can be mounted in series to obtain more complete separation. Also that the centrifugal fan may be driven from a motor or source of motive power disposed externally of the chamber 31.

## Claims

1. A method of vapour-phase soldering comprising the steps of conveying the objects (1) to be heated, continuously or intermittently, along a path (C3) through a treatment zone (3) containing the vapour generated by heating a high boiling point working fluid, whereby the objects (1) are heated to effect solder reflow, condensed vapour being re-heated and re-vapourised, characterised by the further steps of discharging the vapour into the treatment zone (3) to one side of said path (C3) flowing the vapour across said path, to a collecting zone (6) at the other side of said path cooling and condensing vapour which flows into said collecting zone (6) collecting the vapour condensed in said collecting zone, and recycling the condensed vapour through the heating, discharging, flowing and cooling steps.

2. A vapour-phase soldering apparatus comprising heating means for vapourising a high boiling point working fluid and a treatment chamber (3) in which the vapour of said high boiling point working fluid heats the objects (1) to be heated while they are conveyed, continuously or intermittently, by conveyor means (C3) along a path through the vapour, characterised by the heating means (24, 26) for generating the vapour of said working fluid being arranged to discharge the vapour generated thereby into the treatment chamber (3) above said conveyor means (C3) a collecting chamber (6) below said conveyor means (C3) to collect vapour traversing said path (C3) cooling means (7) for condensing vapour in said collecting chamber (6), and means (8) for withdrawing working fluid condensate from said collecting chamber.

3. Apparatus according to claim 2, characterised by air-flow means (12, 13) for intercepting working fluid vapour which may escape or be conveyed from the treatment chamber (3), and means (16, 17) for collecting the air vapour mixture and condensing (7', 7", 37) the working fluid therein.

4. Apparatus according to claim 3, characterised by a pre-heat chamber (2), a treatment chamber (3) and a drying chamber (4) through which the objects (1) to be heated are conveyed in succession by said conveyor means (C1—C5) a heated air-flow being produced (19, 14; 21, 15 in said pre-heat chamber (2) and/or drying chamber (4) to intercept working fluid vapour passing from the treatment chamber (3) into said pre-heat chamber (2) and/or drying chamber (4).

5. Apparatus according to claim 4, characterised by the collected air/vapour mixture being condensed in a collecting chamber (16, 17) below said pre-heat chamber (2) and/or drying chamber (4) and incorporating cooling means (7', 7") disposed below said path.

6. Apparatus according to claim 3, 4 or 5, characterised by vapour being separated from air in the collected air/vapour mixture by means of a separator (30) comprising a chamber (31) containing a centrifugal fan (35), the rotation of which throws the air/vapour mixture conveyed to the chamber radially outwards towards at least one cooling surface (37), the chamber (31) having an outlet (38) for working fluid condensate collected therein and another outlet (33) for air separated from the vapour.

7. Apparatus according to claim 3, 4, 5 or 6, characterised by means for recirculating collected air, after condensing working fluid therefrom, to the means (14, 15) producing the air flow.

8. Apparatus according to any one of claims 2 to 7, characterised by the conveyor means being generally horizontal and divided into conveyor sections (C1—C5), the conveyor section (C3) traversing the treatment chamber (3) being separate from immediately upstream and downstream conveyor sections (C2, C4).

9. Apparatus according to any one of claims 2 to 8, characterised by the heating means (23, 26) for generating the vapour being located in an upper region of the treatment chamber (3).

10. Apparatus according to any one of claims 2 to 9, characterised by heating means which comprise electrically heated elements (26) of porous conductive material having interconnected pores, the working fluid being vapourised by passing it through the heated porous elements.

11. The method according to claim 1, characterised by the further steps of intercepting vapour which escapes or is conveyed from the treatment zone by an air-flow, separating the vapour from at least part of the resultant air/vapour mixture by centrifugally projecting the air/vapour mixture towards at least one cooling surface, and collecting and re-cycling the working fluid condensate.

**Patentansprüche**

1. Verfahren zum Dampfphasenlöten, bei dem die zu erwärmenden Gegenstände (1) kontinuierlich oder intermittierend entlang eines Weges (C3) durch eine Behandlungszone (3) gefördert werden, die den durch Erwärmen eines Arbeitsfluides mit hohem Siedepunkt erzeugten Dampft enthält, wodurch die Gegenstände (1) erwärmt werden, um ein Lötmittelfließen zu bewirken, wobei der kondensierte Dampf wiedererwärmt und wiederverdampft wird, dadurch gekennzeichnet, daß der Dampf in der Behandlungszone (3) auf eine Seite des Weges (C3) entladen wird, daß der Dampf, den Weg überquerend, zu einer Sammelzone (6) auf der anderen Seite des Weges geleitet wird, daß der in die Sammelzone strömende Dampf gekühlt und kondensiert wird, daß der in der Sammelzone (6) kondensierte Dampf gesammelt wird und daß der kondensierte Dampf durch Erwärmen, Entladen, Zuleiten und Kühlen zurückgeführt wird.

2. Apparat zum Dampfphasenlöten, der Heizmittel zum Verdampfen eines Arbeitsfluides mit hohem Siedepunkt und eine Behandlungskammer (3) umfaßt, in der der Dampf des Arbeitsfluides mit hohem Siedepunkt die zu erwärmenden Gegenstände (1) erwärmt, während sie kontinuierlich oder intermittierend durch Fördermittel entlang eines Weges durch den Dampf gefördert werden, gekennzeichnet, durch die Anordnung der Heizmittel (24, 26) zum Erzeugen des Dampfes des Arbeitsfluides, um den dadurch erzeugten Dampf in die Behandlungskammer (3) oberhalb der Fördermittel (C3) zu entladen, durch eine Sammelkammer (6) unterhalb der Fördermittel (C3), um Dampf, der den Weg (C3) überquert, zu sammeln, durch Kühlmittel (7) zum Kondensieren des Dampfes in der Sammelkammer (6) und durch Mittel (8) zum Abziehen des Arbeitsfluidskondensates aus der Sammelkammer.

3. Vorrichtung nach Anspruch 2, gekennzeichnet, durch Luftströmungsmittel (12, 13) zum Abfangen von Arbeitsfluiddampf, der aus der Behandlungskammer (3) entweichen kann oder abgefördert wird, und durch Mittel (16, 17) zum Sammeln des Luft/Dampf-Gemisches und Kondensieren (7', 7", 37) des Arbeitsfluides darin.

4. Apparat nach Anspruch 3, gekennzeichnet, durch eine Vorheizkammer (2), eine Behandlungskammer (3) und durch eine Trocknungskammer (4) durch welche die zu erwärmenden Gegenstände (1) durch die Fördermittel (C1—C5) nacheinander gefördert werden, und durch einen erwärmten Luftstrom, der in der Vorheizkammer (2) und/oder in der Trocknungskammer (4) erzeugt wird (19, 14; 21, 15), um Arbeitsfluiddampf abzufangen, der von der Behandlungskammer (3) in die Vorheizkammer (2) und/oder in die Trocknungskammer (4) gelangt.

5. Apparat nach Anspruch 4, gekennzeichnet, durch das Kondensieren des gesammelten Luft/Dampf-Gemisches in einer Sammelkammer (16, 17) unterhalb der Vorheizkammer (2) und/oder der Trocknungskammer (4) mit unterhalb des vorerwähnten Weges angeordneten Kühlmitteln (7', 7'').

6. Apparat nach Anspruch 3, 4 oder 5, gekennzeichnet durch das Trennen von Dampf von der Luft in dem gesammelten Luft/Dampf-Gemisch mittels eines Separators (30), der eine Kammer (31) umfaßt, die ein Zentrifugalgebläse (35) enthält, dessen Rotation das in die Kammer geförderte Luft/Dampf-Gemisch radial nach außen in Richtung wenigstens einer Kühlfläche (37) schleudert, und dadurch, daß die Kammer (31) einen Auslaß (38) für das in ihr gesammelte Arbeitsfluidkondensat und einen weiteren Auslaß (33) für die aus dem Dampf getrennte Luft aufweist.

7. Apparat nach Anspruch 3, 4, 5 oder 6, gekennzeichnet, durch Mittel zum Rückleiten von gesammelter Luft, nachdem das Arbeitsfluid aus dieser Luft herauskondensiert ist, zu den Mitteln (14, 15) zum Erzeugen des Luftstromes.

8. Apparat nach einem der Ansprüche 2 bis 7, dadurch gekennzeichnet, daß die Fördermittel im allgemeinen horizontal verlaufen und in Förderabschnitte (C1—C5) unterteilt sind und daß der Förderabschnitt (C3), der die Behandlungskammer (3) durchquert, vom unmittelbar zuführenden und abführenden Förderabschnitt (C2 bzw. C4) getrennt ist.

9. Apparat nach einem der Ansprüche 2 bis 8, gekennzeichnet durch Heizmittel (23, 26) zum Erzeugen des Dampfes, die in einem oberen Bereich der Behandlungskammer (3) angeordnet sind.

10. Apparat nach einem der Ansprüche 2 bis 9, gekennzeichnet, durch Heizmittel, die elektrisch beheizte Elemente (26) aus porösem leitenden Material mit verbundenen Poren umfassen, wobei das Arbeitsfluid verdampft wird, indem es durch die beheizten porösen Elemente geleitet wird.

11. Verfahren nach Anspruch 1, gekennzeichnet, durch Abfangen des aus der Behandlungszone entweichenden oder abgeförderten Dampfes durch einen Luftstrom, durch Trennen von Dampf aus wenigstens einem Teil des Luft/Dampf-Gemisches durch zentrifugales Schleudern des Luft/Dampf-Gemisches auf wenigstens eine Kühlfläche und durch Sammeln und Zurückführen des Arbeitsfluidkondensates.

## Revendications

1. Procédé de soudage en phase vapeur, comprenant les étapes de transport des objets (1) à chauffer, de façon continue ou intermittente, le long d'un trajet (C3) passant dans une zone de traitement (3) qui contient la vapeur formée par chauffage d'un fluide de travail ayant une température d'ébullition élevée, de manière que les objets (1) soient chauffés et assurent une refusion de soudure, la vapeur condensée étant réchauffée et remise à l'état vapeur, caractérisé par les étapes supplémentaires d'évacuation de la vapeur dans la zone de traitement (3) vers un premier côté dudit trajet (C3), la circulation de la vapeur transversalement à ce trajet vers une zone collectrice (6) placée de l'autre côté dudit trajet, le refroidissement et la condensation de la vapeur qui s'écoule dans la zone collectrice (6), la collecte de la vapeur condensée dans cette zone collectrice, et le recyclage de la vapeur condensée dans les étapes de chauffage, d'évacuation, d'écoulement et de refroidissement.

2. Appareil de soudage en phase vapeur, comprenant un dispositif de chauffage destiné à vaporiser un fluide de travail à température d'ébullition élevée et un chambre de traitement (3) dans laquelle la vapeur du fluide de travail à température élevée d'ébullition chauffe les objets (1) à chauffer pendant qu'ils sont transportés, de façon continue ou par intermittence, par un transporteur (C3) le long d'un trajet formé dans la vapeur, caractérisé en ce que le dispositif de chauffage (24, 26) destiné à former la vapeur du fluide de travail est disposé de manière qu'il évacue la vapeur formée ainsi dans la chambre de traitement (3) au-dessus du transporteur (C3), et en ce qu'il comprend une chambre collectrice (6) placée sous le transporteur (C3) afin qu'elle collecte la vapeur traversant ledit trajet (C3), un dispositif de refroidissement (7) destiné à condenser la vapeur se trouvant dans la chambre collectrice (6), et un dispositif (8) d'extraction du condensat du fluide de travail de la chambre collectrice.

3. Appareil selon la revendication 2, caractérisé par un dispositif (12, 13) de circulation d'air destiné à intercepter la vapeur du fluide de travail qui peut s'échapper de la chambre de traitement (3) ou être transporté à partir de celle-ci, et par un dispositif (16, 17) destiné à collecter le mélange de vapeur et d'air et à condenser (7', 7'', 37) le fluide de travail qui y est contenu.

4. Appareil selon la revendication 3, caractérisé par une chambre de préchauffage (2), une chambre de traitement (3) et une chambre de séchage (4) dans lesquelles les objets (1) à chauffer sont transportés successivement par le transporteur (C1—C5), un courant d'air chauffé étant produit (19, 14; 21, 15) dans la chambre de préchauffage (2) et/ou la chambre de séchage (4) afin qu'il intercepte la vapeur de fluide de travail provenant de la chambre de traitement (3) et pénétrant dans la chambre de préchauffage (2) et/ou la chambre de séchage (4).

5. Appareil selon la revendication 4, caractérisé en ce que le mélange collecté d'air et de vapeur est condensé dans une chambre collectrice (16, 17) placée sous la chambre de préchauffage (2) et/ou la chambre de séchage (4) et comprenant un dispositif de refroidissement (7', 7") placé au-dessous dudit trajet.

6. Appareil selon l'une quelconque des revendications 3, 4 et 5, caractérisé en ce que la vapeur du mélange collecté d'air et de vapeur est séparée de l'air à l'aide d'un séparateur (30) qui comprend une chambre (31) contenant un ventilateur centrifuge (35) dont la rotation chasse le mélange d'air et de vapeur transporté vers la chambre en direction radiale vers l'extérieur, vers au moins une surface de refroidissement (37), la chambre (31) ayant une sortie (38) de condensat du fluide de travail qui y est collecté et une autre sortie (33) d'air séparé de la vapeur.

7. Appareil selon l'une quelconque des revendications 3 à 6, caractérisé par un dispositif de recirculation de l'air collecté, après condensation du fluide de travail contenu, vers le dispositif (14, 15) formant le courant d'air.

8. Appareil selon l'une quelconque des revendications 2 à 7, caractérisé en ce que le transporteur a une orientation générale horizontale et est divisé en tronçons (C1—C5) de transporteur, le tronçon (C3) de transporteur passant dans la chambre de traitement (3) étant séparé des tronçons (C2—C4) qui se trouvent justeen amont et juste en aval.

9. Appareil selon l'une quelconque des revendications 2 à 8, caractérise en ce que le dispositif de chauffage (23, 26) destiné à former la vapeur est placé dans une région supérieure de la chambre de traitement (3).

10. Appareil selon l'une quelconque des revendications 2 à 9, caractérisé par un dispositif de chauffage qui comporte des éléments (26) d'une matière conductrice poreuse ayant des pores reliés, les éléments étant chauffés électriquement, le fluide de travail étant vaporisé par circulation à travers les éléments poreux chauffés.

11. Procédé selon la revendication 1, caractérisé par les étapes supplémentaires d'interception de la vapeur qui s'échappe de la zone de traitement ou qui est transportée depuis cette zone, par un courant d'air, la séparation de la vapeur provenant d'une partie au moins du mélange résultant d'air et de vapeur par projection centrifuge de ce mélange d'air et de vapeur vers au moins une surface de refroidissement, et la collecte et le recyclage du condensat de fluide de travail.

Fig.1

FROM PUMP

VAPOUR GENERATOR

TO VAPOUR GENERATOR.

PUMP 11

FILTER 10

COOLER 9

FAN

R

C1 C2 C3 C4 C5

1 2 3 4 5 6 7 7' 8 12 13 14 15 16 17 18 19 20 21 22 29 30 38

Fig.2

Fig.3

Fig.4